Europäisches Patentamt

(19) European Patent Office

Office européen des brevets

(11) Publication number: **0 247 079**
**B1**

(12) **EUROPEAN PATENT SPECIFICATION**

(45) Date of publication of patent specification :
02.11.89

(51) Int. Cl.⁴ : **B 62 D 55/06**, B 62 D 55/075,
B 62 D 57/02

(21) Application number : 86906395.8

(22) Date of filing : 27.10.86

(86) International application number :
PCT/GB 86/00664

(87) International publication number :
WO/8702634 (07.05.87 Gazette 87/10)

(54) OBSTACLE SURMOUNTING AID FOR TRACKED VEHICLE.

(30) Priority : 29.10.85 GB 8526602

(43) Date of publication of application :
02.12.87 Bulletin 87/49

(45) Publication of the grant of the patent :
02.11.89 Bulletin 89/44

(84) Designated contracting states :
AT BE CH DE FR GB IT LI LU NL SE

(56) References cited :
DE—C— 675 507
GB—A— 1 076 108
US—A— 2 012 090
US—A— 2 878 882

(73) Proprietor : The Secretary of State for Defence in Her
Britannic Majesty's Government of the United King-
dom of Great Britain and
Northern Ireland Whitehall
London SW1A 2HB (GB)

(72) Inventor : GIBSON, Peter, James
110 Nightingale Road
Guildford Surrey (GB)
Inventor : BEARD, David, Roland
17 Norton Road
Camberley Surrey (GB)
Inventor : HINCHEY, Christopher, Bancroft
31 Chertsey Road
Byfleet Surrey (GB)

(74) Representative : Lockwood, Peter Brian et al
Procurement Executive Ministry of Defence Patents 1
A (4) Room 2014, Empress State Building Lillie Road
London SW6 1TR (GB)

## Description

This invention relates to a tracked vehicle, in particular but not exclusively, suitable for unmanned deployment in hostile environments, the vehicle in general comprising a chassis mounted on a pair of independently drivable, parallel tracks defining a track base.

The mobility of an unmanned vehicle is extremely dependent upon the terrain, obstacles in the path of the vehicle causing various mobility failures such as overturning, gross slippage, nose-in failure and hang-up failure, the latter two being caused by engagement of the nose and belly respectively of the vehicle with the terrain.

In particular, nose-in failure will inevitably occur when an obstacle to be surmounted rises precipitously to a height comparable with or greater than the length of the track base of the vehicle.

The present invention seeks to provide a vehicle less susceptible to nose-in failure at precipitous obstacles.

The patent publication DE-C-675507 describes a fighting vehicle, specifically a tank, having a chassis or armoured body surmounted by a gun turret and having a pair of parallel tracks each extending around a pair of large drive wheels between which are three spaced apart idle wheels with a track base defined by the part of the lower run of track that extends from the foremost idle wheel to the rearmost idle wheel. To assist the tank in surmounting an obstacle, it is provided with a cradle-shaped foot, extensible vertically downwards from the belly of the tank by a rack-and-pinion mechanism, to raise the forepart of the tank to the height of the obstacle. When the tank is then driven forward, this foot swings backwards, being pivoted to the chassis or body for this purpose. Once the tracks have engaged the top edge of the obstacle, the foot is retracted.

An optional additional aid to the surmounting of an obstacle is also described in DE-C-675507. This consists of one or more curved beams or rams, mounted inside the chassis or body quite low down and arranged to be extended backwards by means of another rack-and-pinion mechanism. When extended, the rams raise the rear end of the tank off the ground, so that the tank, insofar as not supported by its front end on the obstacle itself, is then supported entirely by means of the beams cantilevered rearwardly at a relatively shallow angle to the horizontal. The top armour, the gun and its turret, and other parts of the tank, are all disposed above these beams.

According to the present invention, in a tracked vehicle comprising a chassis mounted on a pair of independently driveable, parallel tracks defining a track base, and at least one rearwardly extendable ram carried by the chassis to assist the vehicle to surmount an obstacle, the or each ram is arranged for pneumatic operation and is mounted above the chassis to be extendable rearwardly along an axis located on the opposite side of the centre of gravity of the vehicle from the said track base.

The ram axis is (or the ram axes are) preferably disposed at an inclination, preferably in the range of 0° to 60°, to a plane containing the track base, so as to converge with that plane in a position to the rear of the vehicle.

Preferably, the parallel tracks together extend substantially the full width of the chassis so as to cover the belly of the vehicle and thereby minimise hang-up failure, and the chassis carries a top hamper bridging the tracks, an actuating cylinder of the or each ram being mounted on the top hamper.

Each of the tracks preferably rotates on three only direction-changing rollers, comprising two road rollers defining the track base extending between them, and a track drive sprocket roller located forwardly of the track base, with the centre of gravity of the vehicle preferably being located substantially closer to the foremost one of the two road rollers than to the rearmost one.

Preferably two rams are mounted in parallel arrangement to provide lateral stability in use. The rams may be either rigidly interconnected by a cross bar attached to their projectable ends, or may be independently controlled.

Access to the drive mechanism may be achieved by a drawer system, ie the various components being slidably mounted on runners transverse to the longitudinal centre line of the vehicle. The chassis may also be enclosed within a body having a top hamper bridging the tracks, for supporting the rearwardly extending rams. The top hamper also conveniently supports a control means for controlling the vehicle drive mechanisms and the ram energizing means. The energizing means for the rams may be mounted either upon the top hamper or within the body.

A specific embodiment of the invention will now be described by way of example only, with reference to the attached drawings of which :

Figures 1 and 2 are side elevations and plan views respectively of a tracked vehicle fitted with an obstacle surmounting aid, and

Figures 3 and 4 depict the same vehicle respectively encountering and surmounting a precipitous obstacle.

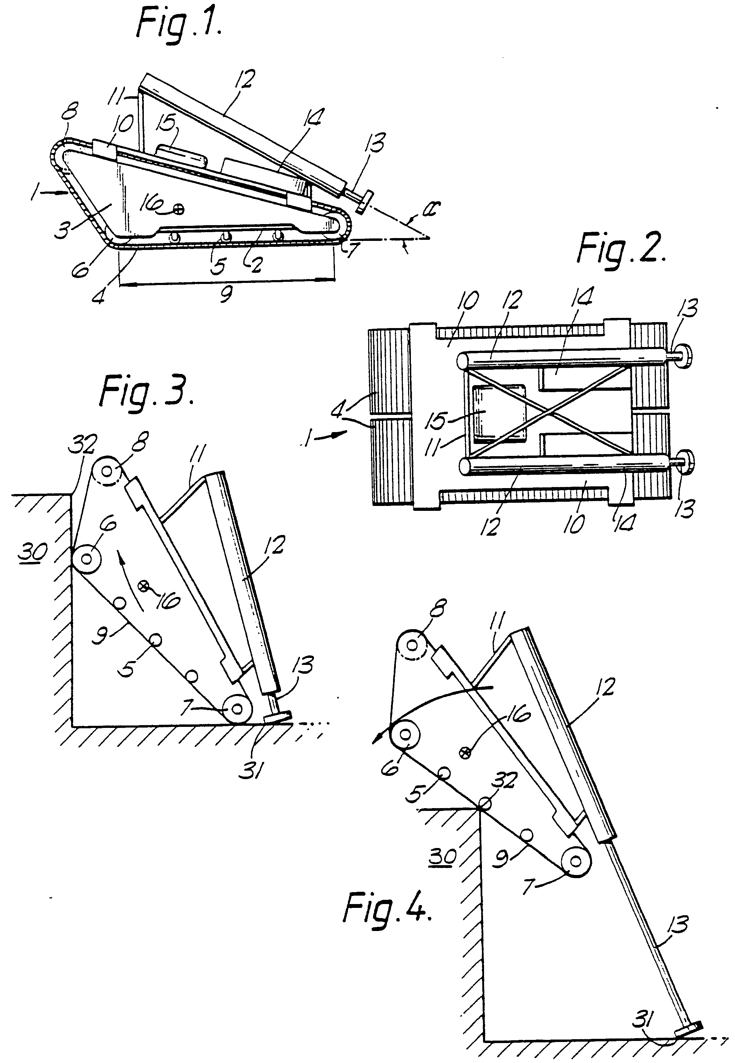

The tracked vehicle 1 illustrated in Figure 1 is intended for unmanned use and has a centre of gravity 16. It comprises a chassis 2 covered by a body 3 and supported on each of two independently drivable, half-width, parallel tracks 4 by support wheels 5. Each track 4 rotates about three direction changing rollers 6, 7 and 8. The two lower rollers, namely a forward road roller 6 and a rear road roller 7, define a track base 9 extending between them. The upper roller 8 is a drive sprocket roller disposed forwardly of the track base 9. Drive mechanisms (not shown) for the drive sprocket roller 8 are contained within the body 3.

The body 3 supports a top hamper 10 upon which is mounted a frame 11 which carries, above the chassis, two cylinders 12 each containing a pneumatic ram 13 which is projectable from the cylinder 12 in a rearward direction by a respective energizing means 14 attached to the top hamper 10. The energizing means 14 comprise a compressed air cylinder. The air connections coupling the energizing means 14 to the cylinders 12 are not shown. The axis of each ram 13 and its associated cylinder 12 is, as shown in Figure 1, inclined at an angle $\alpha$ of 30°, to the plane containing the track base 9. As can also be seen in Figure 1, the ram axes are located on one side, i. e. below the centre of gravity.

Also mounted on the top hamper 10 is an electronic control means 15 comprising sensors, analysers and motivators (not shown) for controlling the vehicle drive mechanisms and the ram energizing means 14. The control means 15 may be arranged for remote command or for command by a pre-programmed computer located within the control means 15 so as to make the vehicle autonomous.

The dispositions of the various vehicle components relative to the road rollers 6 and 7 is selected to ensure that the vehicle has a centre of gravity 16 which lies as low as possibly and as near to the forward roller 6 as is compatible with vehicle stability on level ground. This weight distribution facilitates climbing with the aid of the rams 13, as will now be described with reference to Figures 3 and 4.

Figure 3 depicts the vehicle 1 encountering an obstacle 30 which is higher than the length of the track base 9. The engagement of the unextended rams 13 with the ground at a point 31 and the low disposition of the centre of gravity 16 of the vehicle has prevented the vehicle from proceeding to a position at which the centre of gravity 16 would over-pass the rearward ground engagement point 31 and thereby cause overturning. As soon as the depicted position has been reached the rams 13 are energized, preferably independently of each other, thereby thrusting the vehicle forward as shown in Figure 4, to cause the centre of gravity 16 to overpass the crest 32 of the obstacle 30, whereupon the vehicle is rotated about the crest 32 by its own weight, thereafter to continue moving along the top of the obstacle. The tracks are rotating throughout this manoeuvre and are able to assist, provided that their speed is roughly matched to the speed of the operation of the rams 13. The use of pneumatic actuation for the energizing means 14 and cylinders 12 is to be preferred in this respect to a hydraulic or mechanical system because of its greater resilience.

The rams 13 may also be advantageously extended to absorb shock on rearward descent from the obstacle.

Various angles of inclination of the rams 13 with respect to the track base 9 are permissable within the range 0 to 60 degrees. The variation in thrust angle thus available is preselected to suit the type of terrain to be encountered.

The specific embodiment of the invention herein described is an unmanned vehicle suitable for a range of purposes such as decoy, surveillance, supply or sentry duties in hazardous environments.

## Claims

1. A tracked vehicle comprising a chassis (2) mounted on a pair of independently driveable, parallel tracks (4) defining a track base (9), and at least one rearwardly extendable ram (13) carried by the chassis to assist the vehicle to surmount an obstacle, characterised in that the or each ram (13) is arranged for pneumatic operation and is mounted above the chassis to be extendable rearwardly along an axis located on the opposite side of the centre of gravity (16) of the vehicle from the said track base (9).

2. A vehicle as claimed in Claim 1, characterised in that the ram axis is, or the ram axes are, disposed at an inclination ($\alpha$) to a plane containing the track base (9) so as to converge therewith in a position behind the vehicle.

3. A vehicle as claimed in Claim 2, characterised in that the angle of said inclination ($\alpha$) is in the range 0° to 60°.

4. A vehicle as claimed in Claim 3, characterised in that the said angle is 30°.

5. A vehicle as claimed in any one of the preceding claims, characterised in that the parallel tracks (4) together extend substantially the full width of the chassis (2) so as to cover the belly of the vehicle and in that the chassis (2) carries a top hamper (10) bridging the tracks, an actuating cylinder (12) of the or each ram (13) being mounted on the top hamper.

6. A vehicle as claimed in any one of the preceding claims, being an unmanned vehicle characterised in that the chassis (2), together with track drive mechanisms mounted thereon, are located entirely within the periphery of the tracks (4).

7. A vehicle as claimed in Claim 5 or Claim 6, characterised in that the inner edges of the two tracks (4) lie closely adjacent to each other, the chassis (2) being covered by a body (3) which supports the top hamper (10) with the latter lying above and bridging the tracks.

8. A vehicle as claimed in any one of the preceding claims, characterised in that each of the tracks (4) rotates on three only direction-changing rollers, comprising two road rollers (6, 7) defining the track base (9) extending between them, and a track drive sprocket roller (8) located forwardly of the track base.

9. A vehicle as claimed in Claim 8, characterised in that the two road rollers for each track (4) comprise a forward road roller (6) and a rearward road roller (7), the centre of gravity (16) of the vehicle being located substantially closer to the forward road roller (6) than to the rearward road roller (7).

10. A vehicle as claimed in any one of the preceding claims, characterised by a plurality of said rams (13) arranged to be controlled independently of each other.

## Patentansprüche

1. Gleiskettenfahrzeug mit einen Fahrgestell (2), das auf zwei unabhängig voneinander antreibbaren parallelen Gleisketten (4) montiert ist, die eine Gleiskettenbasis (9) bestimmen, und mit mindestens einen von dem Fahrgestell getragenen, nach hinten ragenden Stempel (13) zur Unterstützung des Fahrzeugs beim Überklettern eines Hindernisses, dadurch gekennzeichnet, daß der bzw. jeder Stempel (13) für pneumatische Betätigung ausgebildet und oberhalb des Fahrgestells so angeordnet ist, daß er nach rückwärts längs einer Achse ausfahrbar ist, die auf der mit Bezug auf die Gleiskettenbasis (9) entgegengesetzten Seite des Schwerezentrums (16) des Fahrzeugs gelegen ist.

2. Fahrzeug nach Anspruch 1, dadurch gekennzeichnet, daß die Achse des bzw. jedes Stempels mit einer Neigung ($\alpha$) zu einer die Gleiskettenbasis (9) enthaltenden Ebene verläuft, so daß sie an einer hinter dem Fahrzeug liegenden Stelle damit zusammenläuft.

3. Fahrzeug nach Anspruch 2, dadurch gekennzeichnet, daß der Neigungswinkel ($\alpha$) im Bereich von 0° bis 60° liegt.

4. Fahrzeug nach Anspruch 3, dadurch gekennzeichnet, daß der genannte Winkel 30° beträgt.

5. Fahrzeug nach einem der vorhergehenden Ansprüche, dadurch gekennzeichnet, daß die parallelen Gleisketten (4) zusamnen sich über im wesentlichen die gesamte Breite des Fahrgestells (2) erstrecken, so daß sie die Bauchseite des Fahrzeugs bedecken, und daß das Fahrgestell (2) einen die Gleisketten oben überbrückenden Korb (10) trägt, auf welchen ein Betätigungszylinder (12) für den bzw. jeden Stempel (13) montiert ist.

6. Fahrzeug nach einem der vorhergehenden Ansprüche, bei welchem es sich um ein unbemanntes Fahrzeug handelt, dadurch gekennzeichnet, daß das Fahrgestell (2) zusammen mit den daran montierten Gleiskettenantrieben vollständig innerhalb der Peripherie der Gleisketten (4) liegt.

7. Fahrzeug nach Anspruch 5 oder 6, dadurch gekennzeichnet, daß die innenliegenden Ränder der beiden Gleisketten (4) nahe nebeneinander liegen und das Fahrgestell (2) durch einen Körper (3) überdeckt ist, der den oberen Korb (10) trägt, wobei der letztere über den Gleisketten liegt und diese überbrückt.

8. Fahrzeug nach einem der vorhergehenden Ansprüche, dadurch gekennzeichnet, daß jede der Gleisketten (4) auf drei Umlenkrollen läuft, die zwei Laufrollen (6, 7), welche die zwischen ihnen verlaufende Gleiskettenbasis (9) begrenzen, und eine Gleiskettenantriebsrolle (8) aufweisen, die vorderhalb der Gleiskettenbasis gelegen ist.

9. Fahrzeug nach Anspruch 8, dadurch gekennzeichnet, daß die beiden Laufrollen jeder Gleiskette (4) eine vordere Laufrolle (6) und eine hintere Laufrolle (7) aufweisen und das Schwerezentrum (16) des Fahrzeugs wesentlich näher an der vorderen Laufrolle (6) als an der hinteren Laufrolle (7) liegt.

10. Fahrzeug nach einem der vorhergehenden Ansprüche, gekennzeichnet durch eine Mehrzahl von Stempeln (13), die unabhängig voneinander steuerbar sind.

## Revendications

1. Véhicule à chenilles comportant un châssis (2) monté sur un couple de chenilles parallèles (4) pouvant être entraînées de façon indépendante et définissant une base (9), et au moins une tige de piston (13) pouvant être déployée vers l'arrière et portée par le châssis de manière à aider le véhicule à franchir un obstacle, caractérisé en ce que la ou chaque tige de piston (13) est agencée de manière à avoir un fonctionnement pneumatique et est montée au-dessus du châssis de manière à pouvoir être déployée vers l'arrière le long d'un axe situé de l'autre côté de ladite base (9) d'application des chenilles, par rapport au centre de gravité (16) du véhicule.

2. Véhicule selon la revendication 1, caractérisé en ce que le ou les axes de la ou des tiges de piston sont disposés de manière à avoir une inclinaison ($\alpha$) par rapport à un plan contenant la base (9) formée par les chenilles de manière à converger avec ce plan en direction d'une position située en arrière du véhicule.

3. Véhicule selon la revendication 2, caractérisé en ce que l'angle de ladite inclinaison ($\alpha$) est compris dans la gamme allant de 0° à 60°.

4. Véhicule selon la revendication 3, caractérisé en ce que ledit angle est égal à 30°.

5. Véhicule selon l'une quelconque des revendications précédentes, caractérisé en ce que les chenilles parallèles (4) s'étendent conjointement sensiblement sur toute la longueur du châssis (2) de manière à recouvrir la partie ventrale du véhicule et en ce que le châssis (2) porte un capot supérieur (10) s'étendant au-dessus des chenilles, un vérin de manœuvre (12) de la ou de chaque tige de piston (13) étant monté sur le capot supérieur.

6. Véhicule selon l'une quelconque des revendications précédentes, qui est un véhicule non piloté, caractérisé en ce que le châssis (2) ainsi que les mécanismes d'entraînement des chenilles, qui sont montés sur ce châssis, sont entièrement situés dans les limites du pourtour des chenilles (4).

7. Véhicule selon l'une des revendications 5 ou 6, caractérisé en ce que les bords intérieurs des deux chenilles (4) sont situés au voisinage immédiat l'un de l'autre, le châssis (2) étant recouvert par un corps (3) supportant le capot supérieur (10), ce dernier étant situé au-dessus du corps et s'étendant au-dessus des chenilles.

8. Véhicule selon l'une quelconque des revendications précédentes, caractérisé en ce que chacune des chenilles (4) circule autour de seulement trois rouleaux de changement de direction, incluant deux rouleaux (6, 7) en appui au sol et définissant la base (9) d'application des chenilles, qui s'étend entre ces roues, et un rouleau denté (8) d'entraînement de la chenille, situé en avant de la base d'application des chenilles.

9. Véhicule selon la revendication 8, caractérisé en ce que les deux rouleaux en appui au sol pour chaque chenille (4) comportent un rouleau avant (6) et un rouleau arrière (7), le centre de gravité (16) du véhicule étant nettement plus rapproché du rouleau avant (6) que du rouleau arrière (7).

10. Véhicule selon l'une quelconque des revendications précédentes, caractérisé par une pluralité desdites tiges de piston (13) disposées de manière à être commandées indépendamment les unes des autres.

Fig.1.

Fig.2.

Fig.3.

Fig.4.